# EUROPEAN PATENT APPLICATION

(11) **EP 4 685 377 A1**
(43) Date of publication of application: **28.01.2026**
(21) Application number: 24190555.3
(22) Date of filing: 24.07.2024
(51) Int. Cl.: F16L 13/10

(54) **PIPING ARRANGEMENT AND HEATING AND/OR COOLING SYSTEM**

(71) Applicant: BDR Thermea Group B.V., 7332 BD Apeldoorn (NL)
(72) Inventor: BICHLER, Arnaud, 7332 BD Apeldoorn (NL); KIEFFER, Damien, 7332 BD Apeldoorn (NL)
(74) Representative: Grabovac, Dalibor

(57) **Abstract**

The present disclosure provides a piping arrangement which comprises at least
first and second piping elements fluidly coupled to each other at a piping overlap, in which overlap the first and second piping elements at least partially overlap in a flow direction of the fluid flow and are arranged such that a gap at the piping overlap in a direction perpendicular to the flow direction is formed between an outer side of the first piping element and an inner side of the second piping element. An adhesive region is provided at the piping overlap and at least partially fills the gap volume with adhesive, wherein the first and second piping elements adhere to each other by means of the adhesive, and the adhesive region is at least in parts in contact with the outer side of the first piping element and the inner side of the second piping element.

## Description

### Technical field

The invention concerns a piping arrangement, the use thereof and a heating and/or cooling system comprising said piping arrangement.

### Background

Piping arrangements are, at a joint connecting first and second piping elements, often brazed. However, brazed joints may be perceived as insufficient in terms of reliability, repeatability and/or may imply design constraints. The quality of a brazed joint may depend on the worker actually carrying out brazing, e.g. the experience, and the conditions, such as possible access, space for tools and/or positioning of parts. For example, it is conceivable that a system turns out to be less compact due to limitations as to the compactness imposed by brazing. This may lead to risks associated with brazed joints/connections, e.g. occurrence of leaks.

A specific application, to which the present disclosure is not limited, may be flammable refrigerant, which creates additional risk. For maintenance purpose, it is required to disassemble/reassemble the piping connection when an element of the circuit needs to be replaced. There may remain a small amount of refrigerant in the circuit, even if a vacuum draw is achieved. In this case, with flammable refrigerant as propane, there is a safety risk for the installer when brazing-debrazing, as it is done with a flame on the circuit.

There is a need for a reliable and simple way of joining piping elements. Hence, improvements as to the reliability and safety, as well as the versatility and handling of a joint joining piping elements are desired.

### Summary of the invention

The present invention solves this problem and provides a piping arrangement/assembly for flowing fluid, optionally of a fluid circuit of a heating and/or cooling system. The piping arrangement comprises at least first (i.e. inner) and second (i.e. outer) piping elements fluidly coupled to each other at a piping overlap (section), in which overlap the first and second piping elements at least partially overlap in a flow direction of the fluid flow (i.e. axially) and are arranged such that a gap at the piping overlap in a direction perpendicular to the flow direction (i.e. transverse direction) is formed between an outer side of the first piping element and an inner side of the second piping element. A size of the gap seen in a cross-sectional view perpendicular to the flow direction corresponds to the difference between the outer diameter of the first piping element and the inner diameter of second piping element at the piping overlap, wherein the gap and the overlap define a gap volume between the first and second piping elements. An adhesive region is provided at the piping overlap and at least partially fills the gap volume with adhesive, wherein the first and second piping elements adhere to each other by means of the adhesive, and the adhesive region is at least in parts in (direct) contact with the outer side of the first piping element and the inner side of the second piping element. The size of the gap is less than 0.5 mm, optionally less than 0.2 mm, and the piping overlap is, seen in the flow direction, at least 4 mm, and the gap volume is between 0.001 to 0.20 ml, preferably between 0.001 to 0.10 ml.

Adhering two parts together by means of the adhesive may mean to hold the parts together and also to create a seal between the parts, in particular a high performance sealing.

The idea underlying the present invention is joining of piping elements by means of an overlap and adhesive between the piping elements. The overlap may be seen as a male/female connection, wherein the first, inner piping element represents the male part, and the second, outer piping element represent the female part. It was found that the minimum piping overlap as claimed, the maximum size of a gap between the piping elements as claimed, and the specific gap volume as claimed which may at least in parts be filled by adhesive, altogether provide for an appropriate connection of the piping elements. For example, a larger gap size may not offer sufficient mechanical resistance, sufficient sealing and the adhesive may flow inside the inner pipe and create a clogging or a reduction in the cross-sectional area of the fluid flow, resulting in reduced heat pump performance or even failure; a shorter piping overlap may reduce the mechanical stability; and the gap volume as claimed provides for an appropriate interrelation/interplay of the gap size and the overlap.

The invention offers various improved embodiments in terms of reliability, repeatability and/or safety, and versatility, practicability and/or handling. Specifically, at least in some embodiments, flexibility regarding relative positions of the female and male parts may be achieved, e.g. including the possibility to make the assembly, i.e. manufacture, horizontal. In particular, safety may be increased, e.g. reduced risk of burn of fluid of high pressure - in particular compared to brazing. Alternatively or additionally, the time to realize the piping arrangement may be relatively short, at least compared to alternative joining types. Less skilled workers may be able to carry out manufacture of the piping arrangement of the invention. Possibly, manufacturing of a piping arrangement of the invention may more easily be automatized. Also benefits in terms of costs of the material (as glue/adhesive is typically less expensive than silver, nuts, crimp etc..) and/or costs of the process (no need for heating) may be achieved for an embodiment of the invention. Alternatively or additionally, a piping arrangement according to an embodiment of the invention may be multi-material in that at most a few constraints apply, as a piping arrangement of an embodiment of the present invention may be more flexible regarding the materials of the piping elements. No deformation of a piping element may be necessary when joining, which may reduce stress exerted on the joined parts. As no flame is needed for manufacture, compared to brazing, the risk associated with the use of flammable fluid to be flown through the piping arrangement of an embodiment of the invention may be reduced. Further, when brazing, there may be thermal conduction between the junction connection and the pipe and components around (high thermal conductivity of e.g. copper tubes). This may cause the surrounding components to heat up, which can lead to failure. It also may mean that designers have to move components further apart to avoid overheating, which may increase material consumption and reduces system compactness. More specifically, when brazing, one has to protect components around or move. This may be specifically important where there are two or more joints very close (on a T-connection, for example). Due to the thermal conduction when brazing one connection, a neighboured connection may be degraded or unbrazed.

The overlap may be seen as a joint, in particular an axial overlap, wherein the axis corresponds to the flow direction of the fluid flow. The overlap, i.e. the joint, may allow for coupling of a first tube and a second tube; or of a tube and an inlet/outlet of a fluid circuit, e.g. fluid piping. In other words, the adhesive may be used to directly connect a piping element to an element of the fluid circuit, e.g. the refrigeration circuit.

The piping overlap may be seen as joining ends/terminations of piping elements. The piping elements are at least close to the respective end/termination of the respective piping element dimensioned such that the piping overlap in terms of claim 1 is realized in the piping arrangement. It is not excluded that the piping elements have, outside the piping overlap, e.g. inner/outer diameters different to the dimensions at the piping overlap.

For the (axial) overlap to be formed, the outer shape, e.g. diameter of the first (i.e. inner) piping element is smaller than the inner shape, e.g. diameter of the second (i.e. outer) piping element, at least at the overlap. Accordingly, the first piping element at least partially overlaps (and e.g. is surrounded by) the second piping element.

Optionally, at least the outer side of the first piping element and the inner side of the second piping element have a circular cross-section. However, other geometries are also possible, preferably matching geometries to the effect that the joined sides of the elements conform to each other.

The adhesive may also be referred to as glue. The adhesive/glue may provide for molecular binding of the adjacent piping elements. Optionally, glue extends in and along the gap volume by means of capillarity. Glue may be added around the entire overlap, or just a part of it. Thermal or chemical activation (with an additional chemical compound/additive) activation of the adhesive is possible, but not necessary. For example, an activator based on copper crystals to facilitate the polymerisation of the adhesive may be used. This may depend on the specific adhesive used.

A step of cleaning may be carried out on the piping elements. It may be decided whether or not cleaning is necessary, and on appropriate means for cleaning. This may have an impact on the mechanical strength, displacement capacity and/or coverage of the adhesive.

The adhesive may be seen as sandwiched between the first and second piping elements. The adhesive may be seen as the only link/connection between the first and second piping elements.

The gap between the first and second piping elements perpendicular to the axial direction (i.e. the direction of the fluid flow) is represented by a cavity between the first and second piping elements (which cavity is at least partially filled by adhesive). In other words, the gap between the first and second piping elements may be seen as relating to a radial distance between the first and second piping elements. It is noted that the gap is seen as the total gap between the first and second piping elements.

The gap may be measured along a line crossing the center of the first piping element. The sum of two gap portions on opposite sides of the first piping element, when seen in a cross-sectional view perpendicular to the flow direction (F), yield the (total) gap size. The gap G = G1 + G2 may be defined as G = D2 - D1, wherein D1 is the outer diameter of first piping element and D2 is the inner diameter of second piping element. Optionally, a difference between outer diameter of the first, inner tube and an inner diameter of second, outer tube is less than 0.2 mm.

The gap volume may be represented by a hollow cylinder, i.e. a cylindrical cavity between the first and second piping elements. The wall thickness of such virtual cylinder corresponds to the gap size, and the length of such virtual cylinder corresponds to the overlap length.

The adhesive volume may be between 0.002 ml to 0.06 ml, in particular between 0.005 ml to 0.03 ml. The adhesive does not need to fill the gap in its entirety, but may only partially fill the gap volume. In some embodiments, the adhesive volume may exceed the gap volume, namely when adhesive is also present outside the overlap. E.g. adhesive is intentionally or unintentionally also at the outside of the first piping element.

Piping elements may be made of metal. For example, aluminum, e.g. instead of copper, may be used. In general, for a piping arrangement including first/second piping elements, the following combinations of materials are typical: copper/copper, copper/brass, copper/ aluminum, copper/stainless steel, aluminum/aluminum. However, further materials and/or combinations are possible.

Piping elements may be realized as a tube, hose, pipe, connector, adaptor etc. Example combinations of piping elements as a first piping element with a second piping element may be as follows: a tube with a tube, a tube with refrigerant components, a tube with hydraulic components, a tube with hydraulic/refrigerant modules, a tube with electronic components (sensor for pressure or temperature, switch etc..). Various combinations are first and second elements are possible.

The first piping element may be regarded as a male part, wherein the second piping element may be regarded as a female part.

It is not excluded that more than two piping elements may be joined at the overlap.

In some embodiments of the invention, no intermediate layer between the first and second piping elements is provided. In this case, the first and second piping elements are directly joined by means of adhesive.

In some embodiments of the invention, the piping arrangement is free of welding and/or brazing lines. Put differently, a piping arrangement of at least some embodiments of the invention has been manufactured without welding and/or brazing.

Optionally, the piping overlap length is, seen in the flow direction, at least 5 mm or at least 10 mm, optionally less than 30 mm long. Put differently, optionally, the gap length (i.e. the piping overlap) is of the same length.

Optionally, the adhesive region is formed by a coherent (e.g. undisjointed or continuous) adhesive volume. This may mean that the adhesive region is continuous, e.g. without separations or interruptions. In other words, the adhesive region may be free of adhesive-free sub-regions. In other words, the adhesive may be present all around, and there must be no discontinuities, e.g. in the periphery. This may define the adhesive region irrespective of the application of the adhesive, e.g. droplets of the adhesive may be applied during manufacture.

Optionally, the adhesive has a specific viscosity at 25°C between 400 and 600 •10⁻³ Pa•s (cP). Examples of suitable adhesives contain anaerobic acrylic and/or the basis Urethanmethacrylate. The adhesive may be configured to activate when there is no more oxygen applied. Additionally or alternatively, the adhesive may activate when in contact with particular material, such as copper or other metals. Additionally or alternatively, the relative density (at 23°C) may be 1.1.

The shear strength according to IS10123 test conditions may be 10 to 100 N/mm².

The adhesive may be UV fluorescent (e.g. for controlling the presence of adhesive).

An example adhesive is Loctite 648 from Henkel.

Optionally, the overlap is free of friction or form fit elements. For example, a piping arrangement of an embodiment of the invention is free of additional securing elements, in particular mechanical joining elements. More specifically, the piping arrangement of an embodiment of the invention is free from form and/or fiction fitting means, such as a ring, e.g. a crimping means. A piping arrangement of an embodiment of the invention may be based on only molecular bonding between the first and second piping elements by way of adhesive between the first and second elements.

Optionally, the first and second piping elements are substantially concentric at least at the piping overlap. In other words, optionally, the first and second piping elements are coaxial in that the first and second piping elements share, at least at the piping overlap, a common center. In a cross-sectional view perpendicular to the axial direction, the first and second piping elements may be concentrically arranged. However, also other alignments between the first and second piping elements at the overlap are possible. Specifically, it may be hard during manufacturing to obtain an ideal coaxial arrangement of the first and second piping elements.

Optionally, an outer diameter of the first and/or second piping elements is less than 23 mm, in particular less than 16 mm, optionally between 5 and 16 mm. Specifically, the outer diameter of the first piping elements may be between 5 and 16 mm, and the inner diameter of the second piping element may be between 5 and 16 mm, wherein the outer diameter of the first piping element is smaller than the inner diameter of the second piping element.

Optionally, the wall thickness of the first and/or second piping elements is at least 0.6 mm, at least at the overlap. Optionally, piping elements having such wall thickness are refrigerant piping pipes for flowing refrigerant. Hydraulic pipes for flowing water-based fluid may have a smaller wall thickness.

The overlap is realized along the entire perimeter (e.g. diameter) of at least the outer side of the first piping element and the inner side of the second piping element. This may be seen as a circumferential overlap. Preferably, the second piping element completely surrounds the first piping element. Hence, it is preferred that the female part completely surrounds the male part, at least at the overlap/joint.

Optionally, at least one of the first and second piping elements, optionally both, are made of copper. According to EN 14276-2 or EN 12735-2, e.g. Cu-DHP (no. CW024A: Cu > 99,9 mass%, Phosphor 0,015 - 0,04 mass%) may be used as copper.

Optionally, one of the first and second piping elements is made of copper (e.g. Cu-DHP, and the other one of the first and second piping elements is made of aluminum or brass or plastic or steel or stainless steel.

Optionally, the piping arrangement is configured to comply with at least one of the following the requirements, more optionally with all of the flowing requirements: a burst pressure of at least 9•10³ kPa, preferably at least 13.5•10³ kPa, even preferably at least 16•10³ kPa; an operational pressure of at least 2•10³ kPa, preferably 4.5•10³ kPa, a leakage rate of less than 1•10⁻³ Pa•m³•s⁻¹ Helium at 3 •10³ kPa at 293 K, more preferably less than 1•10⁻⁶ Pa•m³•s⁻¹ Helium at 3•10³ kPa at 293 K and even more preferably less than 1•10⁻⁸ Pa•m³•s⁻¹ Helium at 3 •10³ kPa at 293K. The burst pressure may be defined as a pressure at which no breakage occurs, but deformation is acceptable. The operational pressure may be defined as a pressure at which no deformation occurs. This may allow for appropriate sealing efficiency. This may fulfill the standards EN 378-2; EN 6033-2-40; and EN ISO 14903 and/or safety/leakage requirements.

Optionally, at least the outer side of the first piping element comprises at least partially at the piping overlap an indentation, such that the dimension of the outer side of the first piping element is reduced. The indentation is a cross-sectional indentation/reduction in that the outer diameter of the first piping element is reduced. This may be seen as a reduction of the outer dimension of first piping element, i.e. to reduce outer cross-section. Outside the indentation, the first piping element may have another size/diameter than at the indentation. For example, the first and second piping elements may have the same diameter except for at the overlap region, where the indentation is realized by means of a reduced diameter of the first piping element.

Additionally or alternatively, at least the inner side of the second piping element comprises at least partially at the piping overlap a widening, such that the dimension of the inner side of the second piping element is increased. The widening is a cross-sectional widening in that the inner diameter of the second piping element is widened. This increase of the inner dimension of the second piping element may be seen as an increase of the inner cross-section. Outside the widening, the second piping element may have another size/diameter than at the widening. For example, the first and second piping elements may have the same diameter except for at the overlap region, where the widening is realized by means of an enlarged diameter of the second piping element.

The invention is also directed to the use of the piping arrangement of the invention in a fluid circuit of a heating and/or cooling system, optionally a heat pump system, wherein refrigerant fluid is flown through the first and second piping elements and the piping overlap.

Optionally, during use, a flammable refrigerant (e.g. propane) is flown through the piping arrangement. Compared to the use of brazing (involving flames) the use of adhesive is particularly expedient.

When a refrigerant is used as fluid, the fluid circuit may be flown at 10 to 42 bar. In a hydraulic circuit, fluid (e.g. water-based) may be flown at a lower pressure, e.g. at 3 to 7 bar.

The invention is also directed to a heating and/or cooling system, optionally comprising a heat pump unit. Specifically, the system of the invention comprises at least one of a refrigerant circuit and a hydraulic circuit for heating or cooling a building. The system comprises a piping arrangement of any the invention.

The invention, in general, refers to any kind of heat pump system, including at least one ground source (water)- and/or air source-heat pump unit. The heat pump units may be indoor or outdoor units. A heat pump unit of the heat pump system may be a split unit or a monobloc unit. The heat pump system may be configured to heat and/or cool air or water (of a closed loop or of an open loop, such as domestic hot water).

As an example, the following steps may be performed during manufacture of a piping arrangement of an embodiment of the invention:
1) Fitting two piping elements together. At least a section of one of the two piping elements, called the female part, surrounds at least a section of the other one of the two piping elements, called the male part.
2) Glue/adhesive is added at the entrance to the fitting / overlap between the two pining elements. The glue moves by capillarity between the two piping elements and fills the gap between the piping elements at least partially. The adhesive may be added around the whole of the joint/overlap or just part of it. The assembly may be carried out horizontally, vertically or freely. If one piping element is above the piping element, it is preferable to use the female part below the male part.
3) Waiting for a defined time for polymerization of the adhesive, if necessary. Optionally, testing for sufficient performance before handling or filling with fluid (e.g. pressure or leakage test).

Detailed embodiments and further advantages and features related to the present invention are described in the following, wherein these examples shall not be regarded as limiting the invention.

### Brief description of the drawings

- Fig. 1: schematically shows in Fig. 1(a) a plan view of a piping arrangement of an embodiment of the invention; in Fig. 1(b) a cross-sectional view in the axial direction of a piping arrangement of an embodiment of the invention; in Fig. 1(c) a cross-sectional view perpendicular to the axial direction of a piping arrangement of an embodiment of the invention.
- Fig. 2: schematically shows in each of Fig. 2(a) to 2(d) planar views of a piping arrangement of an embodiment of the invention.
- Fig. 3: schematically shows a perspective view of a piping arrangement of an embodiment of the invention.

### Detailed description

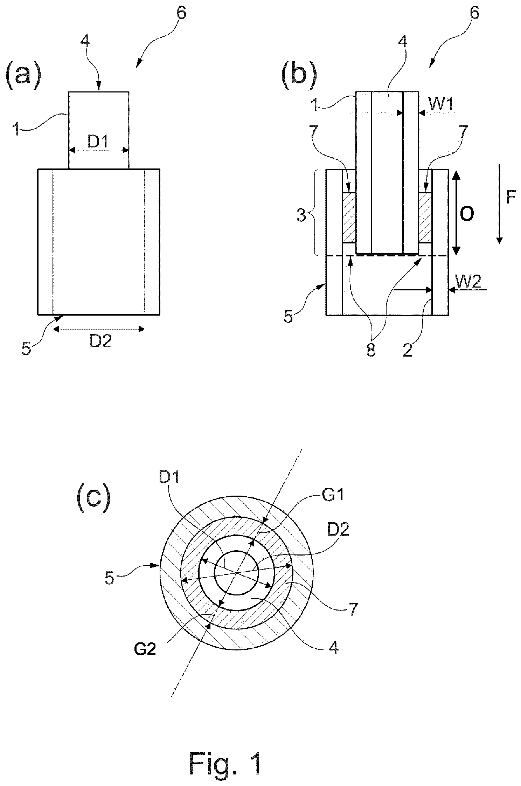

Each of Fig. 1(a) to 1(c) schematically shows a piping arrangement 6 according to an embodiment of the invention for flowing fluid (not shown) inside the piping arrangement 6, wherein Fig. 1(a) is a plan view, Fig. 1(b) is a cross-sectional view in the axial direction (which corresponds to the flow direction F), and Fig. 1(c) is a cross-sectional view perpendicular to the axial direction (i.e. in a transverse direction, perpendicular to the flow direction F).

The piping arrangement 6 may be part of a fluid circuit of a heating and/or cooling system, e.g. a heat pump system (not shown). The piping arrangement 6 may more specifically contain/flow refrigerant as fluid (if part of a refrigerant circuit), or alternatively water-based fluid (if part of a hydraulic circuit). If the piping arrangement 6 is used in a refrigerant circuit, the refrigerant may be flammable.

Turning to Fig. 1(a), the piping arrangement 6 comprises first 4 and second 5 piping elements, partially overlapping in the flow direction F to form a piping overlap (section) 3. The overlap (section) 3 may be regarded as a joint joining the first 4 and second 5 piping elements. The piping overlap 3 is, seen in the flow direction F, at least 4 mm, or at least 5 mm or at least 10 mm, optionally less than 30 mm.

The first piping element 4 is an inner piping element and is located, in the overlap 3, inside the second piping element 5, which is an outer piping element. The first piping element 4 has a smaller outer diameter D1 than the inner diameter D2 of the second piping element 5. The piping elements 4, 5 are, in the embodiment of Fig. 1, cylindrical (having an axis running in the flow direction F) and each represent tubes. The outer diameter D1 of the first 4 and/or the inner diameter D2 of the second 5 piping elements is less than 16 mm, optionally between 5 and 16 mm, wherein the D2>D1.

Fig. 1(b) schematically shows that a (circumferential) gap/clearance 8 is formed between an outer side 1 of the first piping element 4 and an inner side 2 of the second piping element 5. A size of the gap 8 seen in a cross-sectional view perpendicular to the flow direction F corresponds to the difference between the outer diameter D1 of the first piping element 4 and the inner diameter D2 of second piping element 5 at the piping overlap 3, wherein the gap 8 and the overlap 3 define a gap volume V between the first and second piping elements 4, 5. The size of the gap 8 is less than 0.5 mm, optionally less than 0.2 mm and the gap volume V is between 0.001 to 0.20 ml.

An adhesive region 7 at the piping overlap at least partially fills the gap volume V with adhesive, wherein the first and second piping elements 4, 5 adhere to each other due to the adhesive. The adhesive joins the first 4 and second 5 piping elements based on molecular forces. The gap 8 is at least partially filled with adhesive forming an adhesive region 7. The adhesive region 7 is at least in parts in direct contact with the outer side 1 of the first piping element 4 and the inner side 2 of the second piping element 5.

A wall thickness W1 of the first piping element 4 is at least 0.6 mm, at least at the overlap 3. A wall thickness W2 of the second piping element 5 is at least 0.6 mm, at least at the overlap 3. The wall thickness may be different outside the overlap 3.

Fig. 1(b) and 1(c) indicate that the adhesive region 7 is formed by a coherent adhesive volume. This means that the adhesive region 7 is not interrupted and is free of isolated "adhesive islands". Rather, the adhesive substantially forms a hollow cylinder.

The adhesive has a specific viscosity at 25°C between 400 and 600•10⁻³ Pa•s (cP). For the embodiments of Fig. 1, 2 and 3, the adhesive Henkel, Loctite 648, is an option.

Fig. 1 to 3 show that the overlap 3 is free of friction or form fit elements. Specifically, no crimping means may be needed in a piping arrangement 6 of an embodiment of the invention.

Fig. 1(a) to (c) show that the first 4 and second piping elements 5 are substantially concentric at least at the piping overlap 3. This may, in practice, not necessarily be the case, due to manufacturing.

Fig. 1(c) shows that the overlap 3 is realized along the entire perimeter of at least the outer side 1 of the first piping element 4 and the inner side 2 of the second piping element 5. Hence, the adhesive region 7 and the second piping element 5 completely surround the first piping element 4 at the overlap 3, wherein the first piping element 4 and the second piping element 5 sandwich the adhesive region 7.

The gap 8 is defined by the total gap width G representing a wall thickness of the clearance-cylinder between the first 4 and second 5 piping elements related to the diameters, as well as the length O of the overlap 3. The volume V of the gap 8 is defined by V = • x ((0.5 x D2)² - (0.5 x D1))² x O = 0.25 x • x O x (D2²-D1²).

In case of the concentric arrangement shown in Fig.1, the gap size G consists of gaps (parts) G1 and G2 which are of the same size at both sides of the first piping element 4. If the tubes 4, 5 are not concentric, there may be a gap only at one side, e.g. G=G1, G2=0.

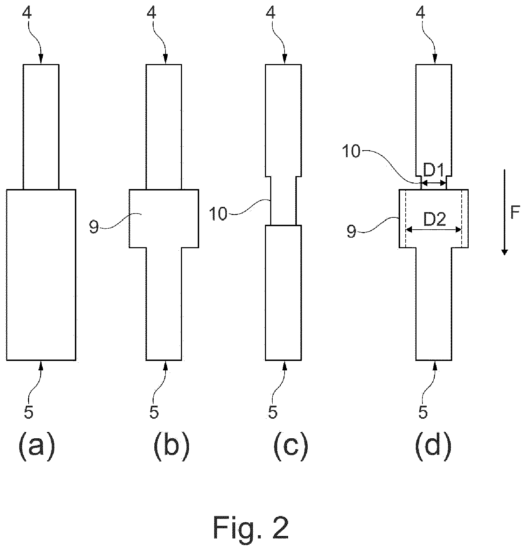

Fig. 2 shows various geometries of first 4 and second 5 piping elements at the overlap 3. Fig. 2(a) shows that the first 4 and second 5 piping elements may have a uniform, continuous geometrical shape, such as a cylinder.

Alternatively, the diameter of the first 4 and/or second 5 piping elements at the overlap 3 may differ from the remaining respective diameter: Fig. 2(b) reflects that the second piping element 5 may comprises at least partially at the piping overlap 3 a widening 9, e.g. such that the dimension of the inner side 2 of the second piping element 5 is increased. In this case, the diameter/geometry of the first 4 and second 5 piping elements may, outside/except for the overlap 3, be substantially identical.

Fig. 2(c) reflects that the first piping element 4 may comprises at least partially at the piping overlap 3 an indentation 10, e.g. such that the dimension of the outer side 1 of the first piping element 4 is decreased. In this case, the diameter/geometry of the first 4 and second 5 piping elements may, outside/except for the overlap 3, be substantially identical.

Fig. 2(d) reflects that the first piping element 4 may comprise at least partially at the piping overlap 3 an indentation 10, and that the second piping element 5 may comprise at least partially at the piping overlap 3 a widening 9. The indentation 10 and the widening 9 are dimensioned such that the outer diameter D1 of the first piping element 4 is smaller than the inner diameter D2 of the second piping element 5 at the overlap 3.

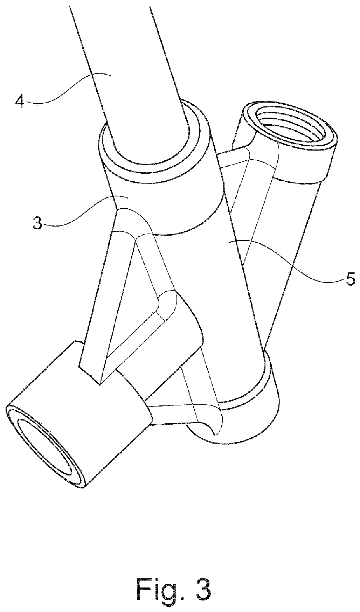

Fig. 3 shows a piping arrangement 6 of an embodiment of the invention, wherein the first piping element 4 is a tube, and the second piping element 5 is a multiple pipes connector. Although an outer side of the connector 5 is not cylindrical, the inner side 2 (not visible in Fig. 3) is cylindrical, so as to match the outer side 1 of the tube 4. In this example, the first piping element 4 is made of copper, and the second piping element 5 is made of brass.

Any of the embodiments shown in the figures comply with at least one of the following the requirements, in line with the applicable standards: burst pressure of at least 9•10³ kPa, preferably at least 13.5•10³ kPa, more preferably at least 16•10³ kPa; an operational pressure of at least 2•10³ kPa, preferably 4.5•10³ kPa, a leakage rate of less than 1•10⁻³ Pa•m³•s⁻¹ Helium at 3•10³ kPa at 293 K, more preferably less than 1•10⁻⁶ Pa•m³•s⁻¹ Helium at 3•10³ kPa at 293 K and even more preferably less than 1•10⁻⁸ Pa•m³•s⁻¹ Helium at 3 •10³ kPa at 293 K. However, these requirements may not in all applications of a piping arrangement 6 of an embodiment of the invention need to be complied with.

The detailed description of the invention is provided with respect to the embodiments depicted in the drawings. Obvious variations and alternatives may occur to the skilled person, based on the summary of the invention. These variations and alternatives are part of the invention in so far they are covered by the appended claims.

### Reference signs

- 1: Outer side of first piping element
- 2: Inner side of second piping element
- 3: Overlap (joint)
- 4: First (inner) piping element
- 5: Second (outer) piping element
- 6: Piping arrangement
- 7: Adhesive region
- 8: Gap
- 9: Cross-sectional widening
- 10: Cross-sectional indentation

- D1: Outer diameter of first piping element
- D2: Inner diameter of second piping element
- W1: Wall thickness of first piping element
- W2: Wall thickness of second piping element
- O: Length of overlap
- G: Total width of gap
- G1, G2: Width of gap part

- F: Flow direction

## Claims

1. Piping arrangement (6) for flowing fluid, optionally of a fluid circuit of a heating and/or cooling system, the piping arrangement comprising at least
first and second piping elements (4, 5) fluidly coupled to each other at a piping overlap (3), in which the first and second piping elements (4, 5) at least partially overlap in a flow direction of the fluid flow (F) and are arranged such that a gap (8) at the piping overlap (3) in a direction perpendicular to the flow direction (F) is formed between an outer side (1) of the first piping element (4) and an inner side (2) of the second piping element (5), a size of the gap (8) seen in a cross-sectional view perpendicular to the flow direction (F) corresponds to the difference between the outer diameter of the first piping element (4) and the inner diameter of second piping element (5) at the piping overlap, wherein the gap (8) and the overlap (3) define an gap volume between the first and second piping elements (4, 5), and
an adhesive region (7) at the piping overlap and at least partially filling the gap volume with adhesive, wherein the first and second piping elements (4, 5) adhere to each other by means of the adhesive, and the adhesive region (7) is at least in parts in contact with the outer side (1) of the first piping element (4) and the inner side (2) of the second piping element (5), wherein
the size of the gap (8) is less than 0.5 mm, optionally less than 0.2 mm,
the piping overlap (3) is, seen in the flow direction (F), at least 4 mm, and
the gap volume is between 0.001 to 0.20 ml, preferably between 0.001 to 0.10 ml.

2. Piping arrangement of claim 1, wherein the piping overlap (3) is, seen in the flow direction (F), at least 5 mm or at least 10 mm, optionally less than 30 mm.

3. Piping arrangement of claim 1 or 2, wherein the adhesive region (7) is formed by a coherent adhesive volume.

4. Piping arrangement of any of the preceding claims, wherein the adhesive has a specific viscosity at 25°C between 400 and 600•10⁻³ Pa•s.

5. Piping arrangement of any of the preceding claims, wherein the overlap (3) is free of friction or form fit elements.

6. Piping arrangement of any of the preceding claims, wherein the first (4) and second piping elements (5) are substantially concentric at least at the piping overlap (3).

7. Piping arrangement of any of the preceding claims, wherein an outer diameter of the first and/or second piping elements is less than 23 mm, optionally less than 16 mm, more optionally between 5 and 16 mm.

8. Piping arrangement of any of the preceding claims, wherein the overlap (3) is realized along the entire perimeter of at least the outer side (1) of the first piping element (4) and the inner side (2) of the second piping element.

9. Piping arrangement of any of the preceding claims, wherein at least one of the first and second piping elements, optionally both, are made of copper.

10. Piping arrangement of any of the preceding claims, wherein one of the first and second piping elements (4, 5) is made of copper, and the other one of the first and second piping elements (5, 4) is made of aluminum and/or brass and/or plastic and/or (stainless) steel.

11. Piping arrangement of any of the preceding claims, which is configured to comply with at least one of the following the requirements:
- a burst pressure of at least 9•10³ kPa, preferably at least 13.5•10³ kPa, more preferably at least 16•10³ kPa;
- an operational pressure of at least 2•10³ kPa, preferably 4.5•10³ kPa;
- a leakage rate of less than 1•10⁻³ Pa•m³•s⁻¹ Helium at 3 •10³ kPa at 293 K, preferably less than 1•10⁻⁸ Pa•m³•s⁻¹ Helium at 3•10³ kPa at 293 K, and more preferably less than 1•10⁻⁸ Pa•m³•s⁻¹ Helium at 3 •10³ kPa at 293 K.

12. Piping arrangement of any of the preceding claims, wherein at least the first piping element (4) comprises at least partially at the piping overlap (3) an indentation (10), such that the dimension of the outer side (1) of the first piping element (4) is reduced.

13. Piping arrangement of any of the preceding claims, wherein at least the second piping element (5) comprises at least partially at the piping overlap (3) a widening (10), such that the dimension of the inner side of the second piping element (5) is increased.

14. Use of the piping arrangement of any of the preceding claims in a fluid circuit of a heating and/or cooling system, optionally a heat pump system, wherein refrigerant fluid is flown through the first and second piping elements and the piping overlap.

15. Heating and/or cooling system, optionally a heat pump system, comprising a piping arrangement (6) of any of the preceding claims 1 to 13.
